# EUROPEAN PATENT APPLICATION

(11) **EP 1 717 699 A1**
(43) Date of publication of application: **02.11.2006**
(21) Application number: 06113322.9
(22) Date of filing: 28.04.2006
(51) Int. Cl.: G06F 9/445

(54) **Software update system and software update management apparatus**

(30) Priority: 28.04.2005 JP 2005131465
(71) Applicant: Sony Ericsson Mobile Communications Japan, Inc., Tokyo (JP)
(72) Inventor: Kawasaki, Hirokuni, Minato-ku Tokyo (JP)
(74) Representative: Thévenet, Jean-Bruno

(57) **Abstract**

A software update system includes: a product (300) running on software; a server (100) for providing update software of the product (300); and a software update management apparatus (200) for managing software updating of the product by connecting the server (100) and the product (300), wherein the server (100) manages software update information of the product (300), stores the update software, and performs data communication with the software update management apparatus (200); the product (300) stores the software and product information on the product, performs data communication with the software update management apparatus (200) and updates the software; and the software update management apparatus (200) acquires the product information from the product (300) and update information on the software of the product from the server (100) in accordance with the product information, downloads the update software of the product in accordance with the update information, and transmits the downloaded software to the product (300) to update the software.

## Description

### Background of the Invention

### 1. Field of the INVENTION

The present invention relates to a software update system and software update management apparatus, which are capable of updating software of a product by using a mobile phone terminal.

### 2. Description of Related Art

When it becomes necessary to update, because of bugs or the like, software installed in a product such as electrical household appliances in an environment unable to connect services on the Internet, the product maker sends a notice to users to update the software of the product.

Media to be used for the notice from the maker to users include (1) direct mail, (2) phone, (3) mail (4) home page (HP) on the Internet, and the like.

A software update method includes (1) leaving a product in the maker, (2) sending software for update to customer houses, (3) updating software through ground-wave data broadcasting, and the like.

According to Japanese Utility Model Application Publication No. HEI-4-66833, a program and information are transmitted over wireless signals to a wireless selective calling receiver, so-called pocket bell, and if received message signals are program information, the receiver stores the received program information in an Electrically Erasable Programmable Read-Only Memory (EEPROM). In this manner, the receiver can have an additional function corresponding to the program.

### Summary of the Invention

A period between a user notifying process to a software update process, however, the following problems may possibly occur.

In the method of leaving a product in the maker, the maker and customers are required to have an unnecessary time cost (time taken to send a product to the maker + time taken to update software in the maker + time taken to return the product to the user). More specifically, in addition to the time taken to actually update software, it takes an unnecessary time to transfer the product.

The method of mailing a software update tool to a user house also takes a mailing time.

In the method of updating software through ground-wave data broadcasting, it is not always possible to update during the time desired by a user, because the user executes a special update preparation process for the product to be updated and a software update process is executed in accordance with information transmitted at a particular time. It is difficult to apply software for updating through the ground-wave data broadcast to all types of apparatus.

Further, any of these methods does not have consistency of the processes from a software update notice process to an actual software update process.

Furthermore, it is necessary to use a separate method specific to each of different types of products.

The present invention has been made under these circumstances. According to an embodiment of the present invention, there is provided a software update system and software update management apparatus capable of executing the processes from a software update notice process to an actual software update process in an integral manner without taking a time cost.

A software update system according to an embodiment of the present invention includes: a product running on software; a server for providing update software of the product; and a software update management apparatus for managing the update software of the product by connecting the server and the product. The server manages software update information of the product, stores the update software and has a function of performing data communication with the software update management apparatus. The product stores the software and product information on the product and has functions of performing data communication with the software update management apparatus and updating the software. The software update management apparatus acquires the product information from the product, acquires update information on the software of the product from the server in accordance with the update information, downloads the update software of the product, and transmits the downloaded software to the product to update the software.

With this configuration, the software update management apparatus is involved between the server and product, checks update of the software of the product, downloads the update software from the server in response to an update request, transmits the software to the product to update the software of the product.

The software update management apparatus may access the server on its own initiative to acquire the update information on the software of the product. Alternatively, the server may notify on its own initiative the software update management apparatus of software updating, so that the software update management apparatus can acquire the update information on the software of the product.

A software update management apparatus according to an embodiment of the present invention includes: first communication means for performing data communication with a server on a network; second communication means for performing data communication with a product running on software; product information acquiring means for acquiring product information on the product by using the second communication means; update information acquiring means for acquiring update information on the software of the product by using the first communication means; and control means for downloading update software of the product in accordance with the update information by using the first communication means and transmitting the downloaded software to the product by using the second communication means to update the software of the product.

In the software update management apparatus, the second communication means may perform data communication with a plurality of products, and the product information acquiring means may acquire and store the product information on the plurality of products. The same software update management apparatus can therefore manage software updating of a plurality of products.

### Brief Description of the Drawings

Fig. 1 is a diagram showing a schematic structure of a software update system according to an embodiment of the present invention;
Fig. 2 shows specific examples of device information B in a Web server in the system shown in Fig. 1;
Fig. 3 shows specific examples of software module management information C for update in the Web server in the system shown in Fig. 1;
Fig. 4 is a diagram shawing a layer structure of the system shown in Fig. 1;
Fig. 5 is a diagram showing a basic sequence of a software update process of the system shown in Fig. 1;
Fig. 6 is an illustrative diagram showing a specific application example according to an embodiment of the present invention;
Fig. 7 is a diagram showing a schematic structure of a software update system according to a modification of an embodiment of the present invention.
Fig. 8 is a flow chart illustrating a process sequence of the software update system shown in Fig. 7;
Fig. 9 is a block diagram showing an example of a schematic structure of hardware of the Web server shown in Fig. 1;
Fig. 10 is a block diagram showing an example of a schematic structure of hardware of a mobile phone shown in Fig. 1; and
Fig. 11 is a block diagram showing an example of a schematic structure of hardware of a product shown in Fig. 1.

### Description of the Preferred Embodiments

In the following, embodiments of the present invention will be described in detail with reference to the accompanying drawings.

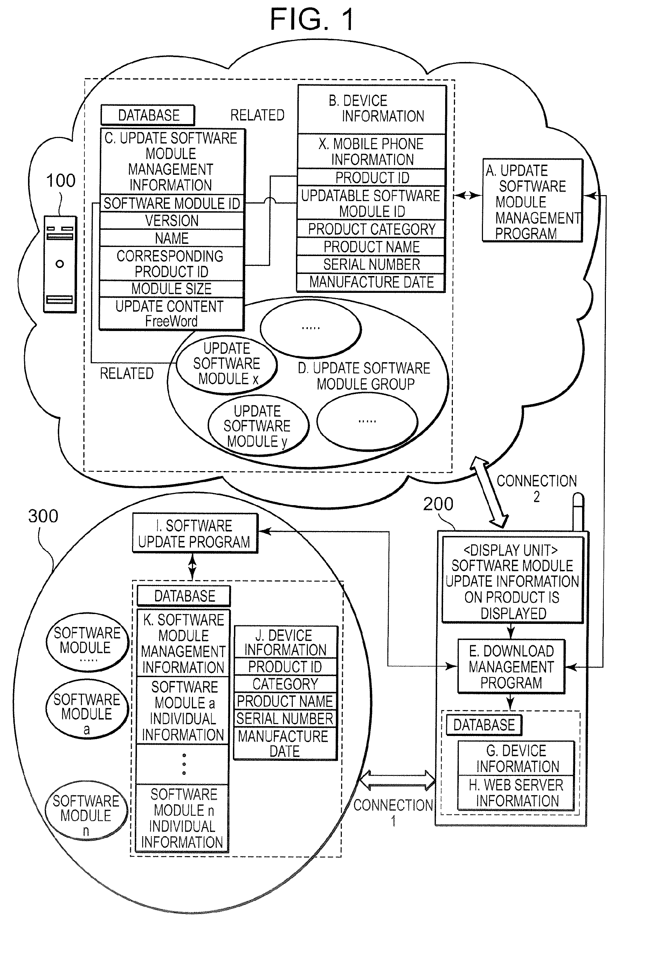

First, with reference to Fig. 1, description will be made on the schematic structure of a software update system according to an embodiment.

This software update system includes a product 300 operating on software, a Web server 100 for providing software that updates the software of the product 300, and a mobile phone terminal 200 involved between the Web server 100 and product 300 as a software update management apparatus for managing software updating of the product 300.

The product 300 includes any apparatus operating on software, such as various electrical household appliances, audio/video apparatus and car navigation apparatus, Connection (CONNECTION 1) between the mobile phone terminal 200 and product 300 is established by wired communications via a connector of the mobile phone terminal 200 or wireless communications utilizing any data communication means such as Bluetooth (registered trademark) and IrDA. Connection (CONNECTION 2) between the mobile phone terminal 200 and Web server 100 on a network is established by connecting the Internet by utilizing wireless communication means for wireless communications with a mobile phone base station.

In this system, a user downloads, by using user's mobile phone, an update software module for the product 300 owned by the user from the Web server, and installs the update software module in the product 300 to thereby update the software of the product 300.

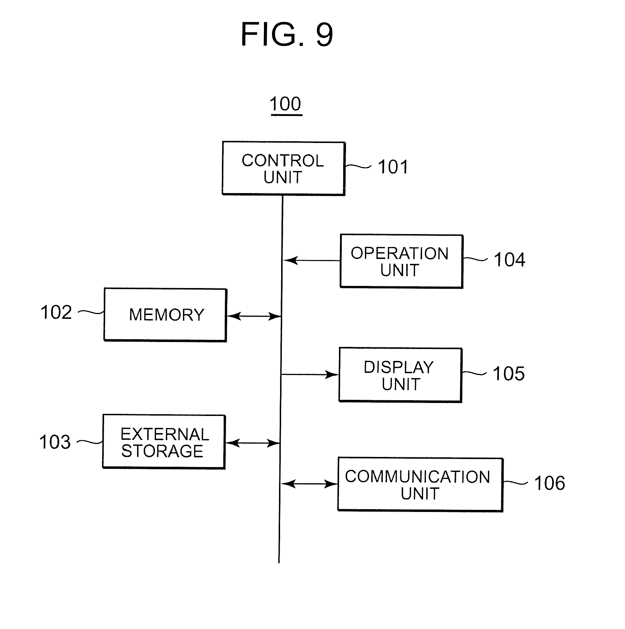

Figs. 9, 10 and 11 show examples of the schematic structures of hardware of the Web server 100, mobile phone terminal 200 and product 300, respectively.

The Web server 100 shown in Fig. 9 has a control unit 101 including a CPU for executing various controls and data processing, a memory 102 for providing a working area and a temporary storage area for storing data and programs to be executed by the control unit 101, an external storage 103 of a large capacity for storing programs and data in a non-volatile manner, an operation unit 104 for inputting instructions and information from a user, a display unit 105 for displaying information to a user, and a communication unit 106 for communicating with the network, e.g., the Internet.

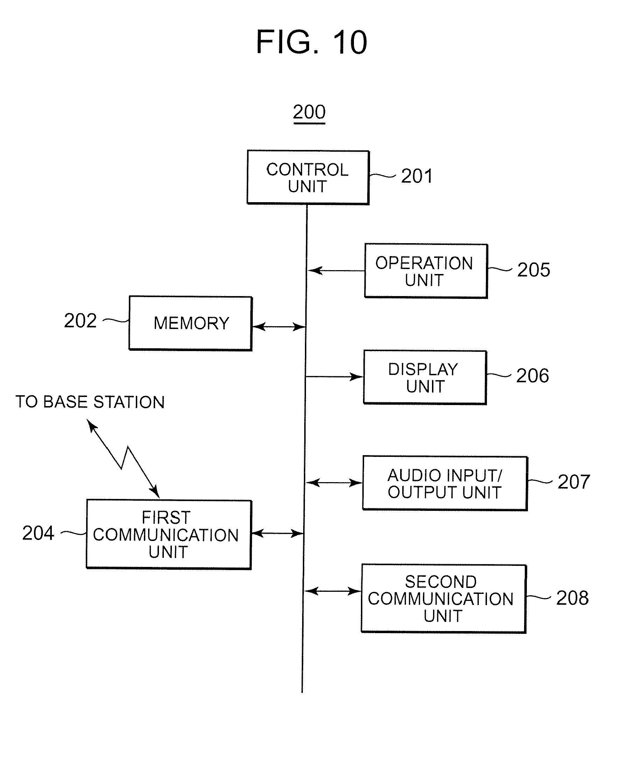

The mobile phone terminal 200 shown in Fig. 10 has a control unit 201 including a CPU for executing various controls and data processing, a memory 202 for storing data and programs to be executed by the control unit 201, a first communication unit 204 for wireless communications with a mobile phone base station, which is mentioned above as CONNECTION 2, an operation unit 205 such as ten-keys, a display unit 206 such as a liquid crystal display, an audio input/output unit 207 for audio input/output of a microphone and a speaker, and a second communication unit 208 for data communications with the product 300, which is mentioned above as

### CONNECTION 1.

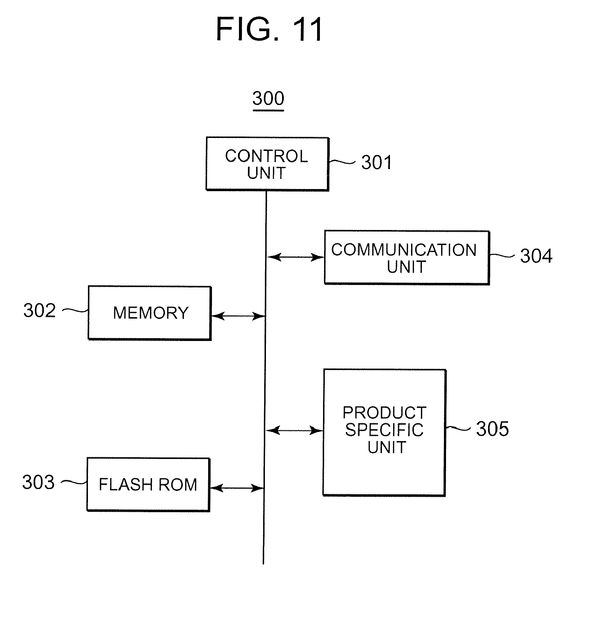

The product 300 shown in Fig. 11 has a control unit 301 including a CPU for executing various controls and data processing, a memory 302 for storing data and programs to be executed by the control unit 301, a communication unit 304 for data communications with the mobile phone terminal 200, which is mentioned above as CONNECTION 1, and a product specific unit 305 for performing product specific processes and operations.

In the following, description will be made on the outline of each constituent element.

The Web server 100 exists on the Internet, and the software configuration of the software update system includes an update software module management program A, device information B, an update software module management program C, and an update software module group D. The information B, C and D is used for managing update software and manages the relation of each product 300. The information B, C and D is registered in a database system and accessed by the update software module management program A. In the following, each of the program A and information B, C and D will be described.

The update software module management program A can receive a request from the mobile phone terminal 200 via the Internet. Upon reception of the request from the mobile phone terminal 200, the update software module management program A can acquire the information B, C and D from the database, and can transmit the information B, C and D to the mobile phone terminal 200.

As shown in Fig. 1, the device information B manages a plurality of data each configured by six pieces of information. More specifically, pieces of the device information B are prepared corresponding in number to the number of products 300 for which the manufactures of the products 300 determine that software updating is performed. Each piece of the device information B has items including "product ID", "updatable software module ID", "product category", "product name", "serial number" and "manufacture date".

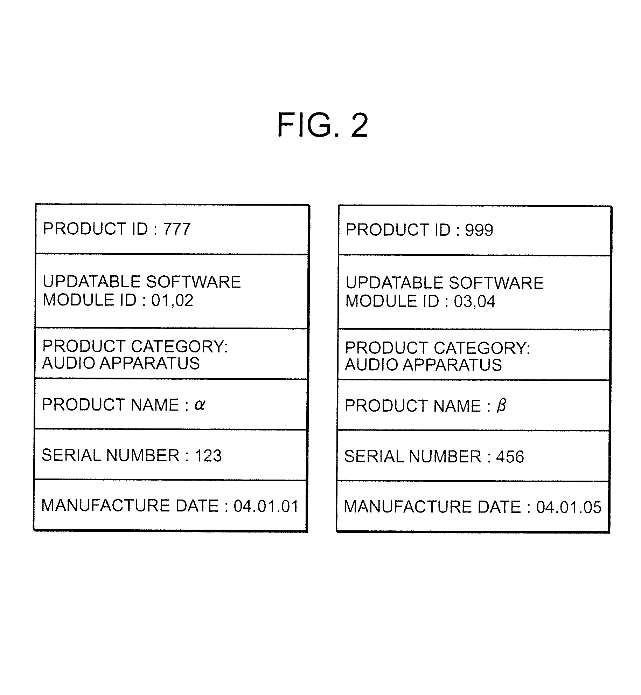

Fig. 2 shows a specific example of the device information B. For example, when it becomes necessary to update software in two products of an audio apparatus α and a television β developed by a certain manufacturer , this product information is constituted of the item contents shown in FIG. 2 for each product,.

Returning to Fig. 1, the update software module management information C manages collectively the management information on each software module in the update software management information D. In this example, each piece of the update software module management information C has items of "software module ID", "version, "name", "corresponding product ID", "module size" and "update content (FreeWord)". The corresponding product ID and software module ID are linked to the corresponding item in the device information B. The updatable software module ID in the device information B is an ID that indicates a connection to the update software module corresponding to the product 300. More specifically, the updatable software module ID is used for identifying the update software module corresponding to the product 300 from the update software module group D.

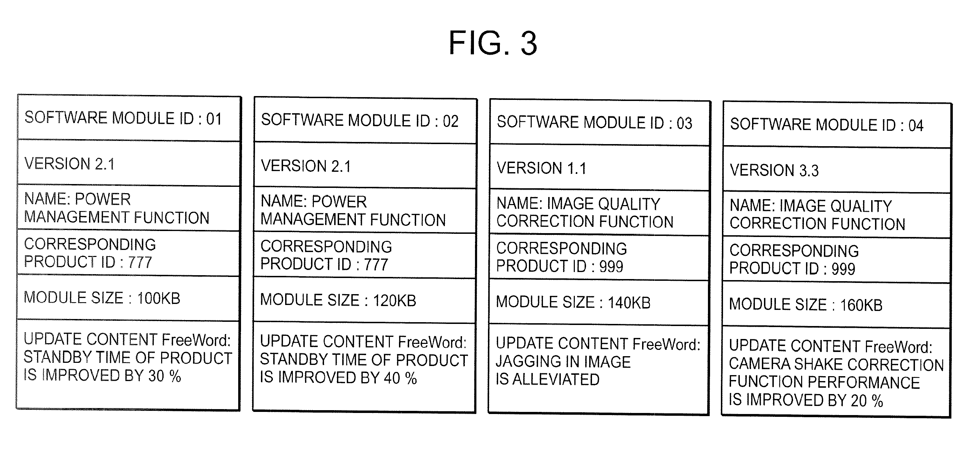

Fig. 3 shows a specific example of the update software module management information C.

Returning to Fig. 1 again, the update software module group D contains update software modules corresponding to each product 300. Each of the software modules have information on the "software module ID", "version", "name", "corresponding product ID", "module size" and "update content (FreeWord)" respectively managed by the update software module management information C, and is synchronized with the update software module management information C. The update content (FreeWord) is data constituting a message for making a user confirm the update content by displaying the update content of the product on the display unit of the mobile phone terminal.

The product 300 is owned by a user and includes those products described above. The product 300 installs various software modules (such as software module a) and runs in accordance with a procedure written in installed software modules. The software configuration of the product 300 in the software update system contains software update programs I, device information J and software module management information K.

The information J and K is registered in a database system and accessed by the software update program I. Each of the software update programs I, device information J and software module management information K will be described below.

The software update program I can receive a request from the mobile phone terminal 200 via CONNECTION 1 utilizing the above-described wireless or wired communications. Upon reception of a request from the mobile phone terminal 200, the software update program I can access the database storing the device information J and software module management information K.

The software update program I can register data transmitted from the mobile phone terminal and acquire/transmit data to be transmitted to the mobile phone terminal, by using the database system.

The device information J is device information of the product 300 necessary for the manufacture developed the product 300 to perform software updating. As shown in Fig. 1, the device information is constituted by five items "product ID", "category" "product name", "serial number" and "manufacture date". The meaning of each item is generally equal to the meaning of each item of the device information B of the Web server 100. A different point from the device information B of the Web server 100 resides in that the product 300 manages only its own information, whereas the Web server 100 manages the device information B on a plurality of products.

The software module management information K manages information on software modules installed in the product 300. Individual information on each managed software module is the same as the update software module management information C of the Web server 100. This information on all software modules installed in the product 300 is registered in the database.

As seen from Fig. 1, the mobile phone terminal 200 is located between the product 300 and Web server 100 in the software update system, receives update software data from the Web server 100 and transfers the update software data to the product 300. The software configuration of the mobile phone terminal 200 in the software update system is constituted by a download management program E, device information G and Web server information H. The download management program E temporarily stores information on software for update by the product 300 and Web server 100 in the device information G and Web server information H, downloads update software in conformity with the performance of the mobile phone terminal 200 from the Web server 100, and transfers the update software to the product 300.

The download management program E can request the Web server 100 on the Internet for updatable software information and update software modules. The acquired information is stored in the device information G and Web server information H so as to allow the mobile phone terminal 200 to update software in an optimum state. Information on the software modules presently installed in the product 300 is acquired via CONNECTION 1 and stored in the device information G. In accordance with the device information G and Web server information H, information on presently updatable software modules is displayed on the display unit to start update by a user operation.

Stored in the device information G is device information acquired from each product 300 and information on the software modules installed in the product 300.

Stored in the Web server information H is access information (URL) of the Web server 100, and software module information and update software modules acquired from the Web server 100.

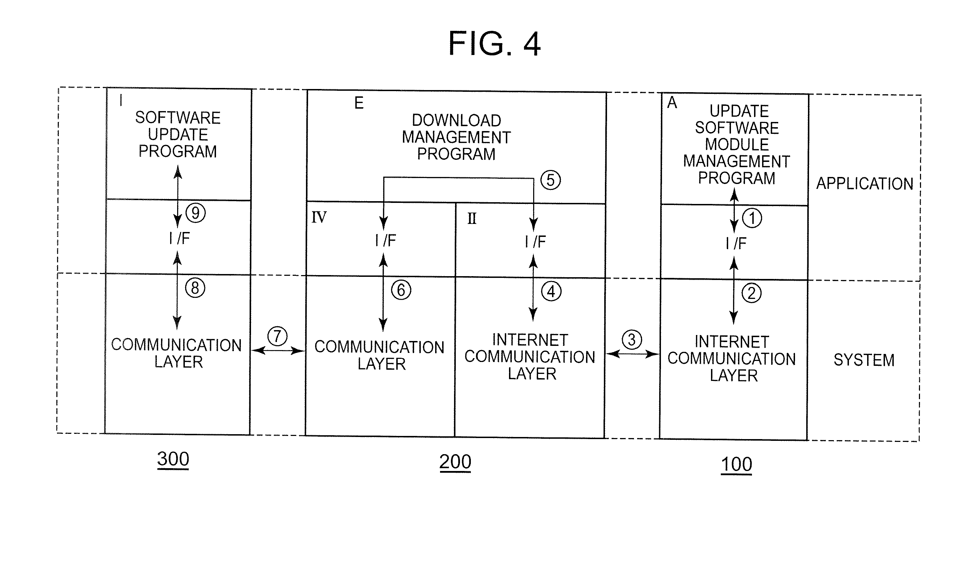

Fig. 4 shows the layer structure of the embodiment system.

The update software module management program is positioned at an upper level layer of the Web server 100, and connected to a lower level Internet/communication layer via an interface (I/F) layer. The Internet/communication layer communicates with an Internet/communication layer at the lower level layer of the mobile phone terminal. The Internet/communication layer of the mobile phone terminal is connected to a download management program at the upper level layer via the interface layer. The download management program is connected to a communication layer at the lower level layer via another interface layer. The communication layer communicates with a communication layer at the lower level layer of the product 300. The communication layer of the mobile phone terminal 200 is connected to the software update program I via the interface layer.

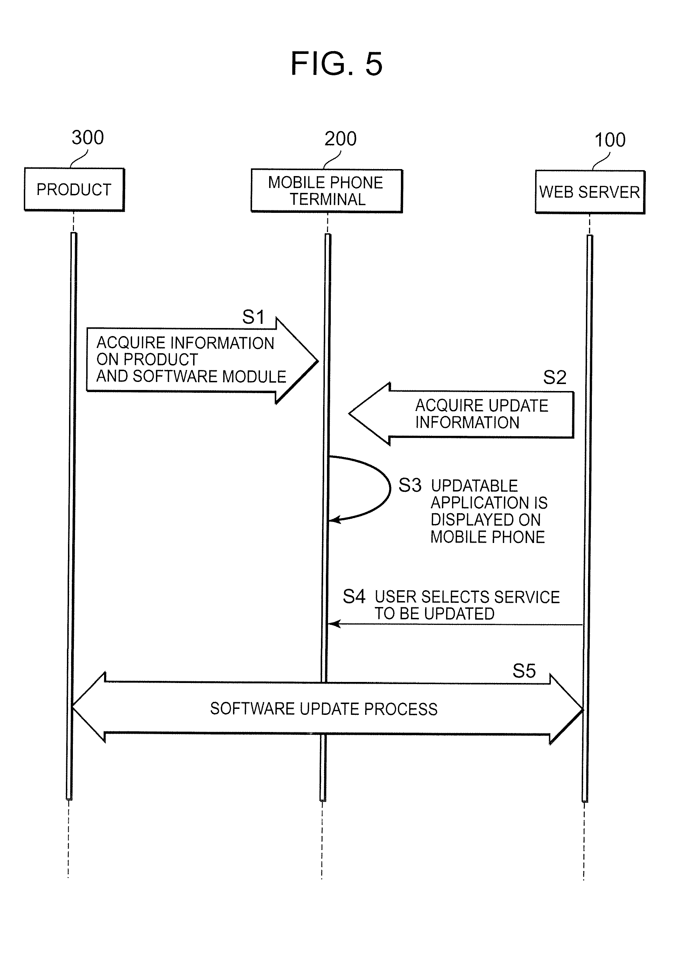

Fig. 5 shows a basic sequence illustrating a software update process of the embodiment system.
(1) The download management program E of the mobile phone terminal 200 acquires device information and installed software information about the product 300 (S1). For example, this process is executed in response to a user instruction after a new product 300 is bought.
(2) The download management program E transmits the information acquired at Step S1 to the Web server 100 to request for updatable software information. This process can be executed in response to a user instruction or executed automatically and periodically.
(3) In response to the request for the updatable software information, the update software module management program A of the Web server 100 transmits the requested software update information on the product 300 to the mobile phone terminal 200 (S2).
(4) The download management program E of the mobile phone terminal 200 displays the updatable software information on the display unit of the mobile phone terminal 200 in accordance with the information acquired at Step S2 (S3).
(5) The download management program E of the mobile phone terminal 200 selects update software in response to a user instruction (S4).
(6) The download management program E of the mobile phone terminal 200 requests the Web server 100 for the selected update software, and starts downloading the update software.
(7) After download completion, the download management program E requests the software update program of the product 300 for software updating, and the software update program I starts executing a software update process.

When the update software is downloaded, the download management program E confirms a a memory capacity of the mobile phone terminal 200, and if it is determined that the memory capacity is insufficient for lump download, the download management program E may request the update software module management program A of the Web server 100 for divisional download of the update software. With the divisional download, large capacity update software can be downloaded even the mobile phone terminal 200 has a small memory capacity.

After Step S1 is once executed, a database storing the software configuration of the product is configured in the mobile phone terminal 200. Therefore, the mobile phone terminal 200 can receive latest software update information specific to the product owned by the user from the Web server and display them on the display unit.

If the software update system for the mobile phone terminal 200 is configured on an open application platform such as Java (registered trademark), it is possible to provide from a maker various extended services in addition to correcting bugs. It is therefore possible to make the electrical household appliances and mobile phone contents on the Web, which have not been able to be directly connected, cooperate each other via the mobile phone terminal 200. There may be possible mutual cooperation, for example, between a mobile phone terminal and an audio component, between a mobile phone terminal and a television, between a mobile phone terminal and a refrigerator, and the like.

A mobile phone website for providing mobile phone contents of this type may be a website for downloading ringtone melody. Since this website maintains always a high access number, it is efficient for information development.

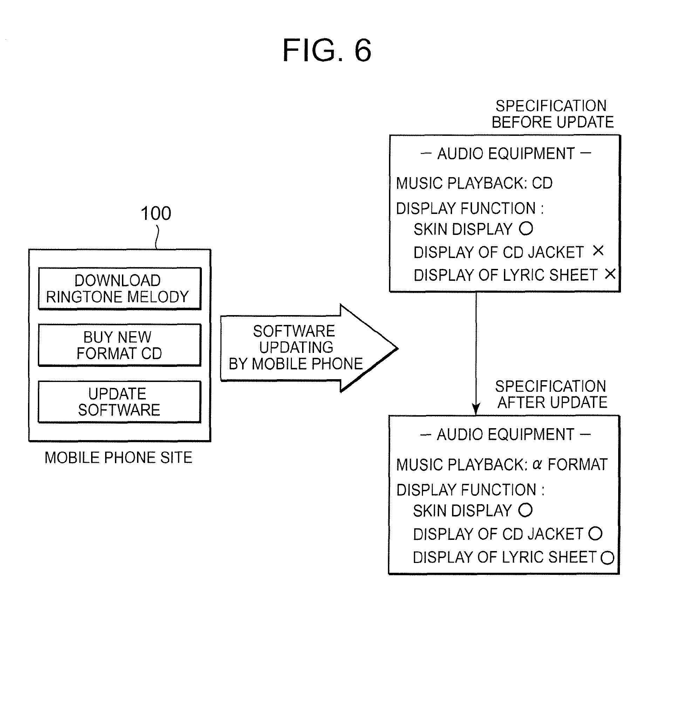

Fig. 6 illustrates a specific application example according to an embodiment of the present invention.

For example, it is assumed that a user of the mobile phone terminal can download a ringtone melody and buy a new format CD at a mobile phone website provided by the Web server 100. It is assumed that the new format is defined that a CD jacket and a lyric sheet can be displayed on the display unit of an audio instrument. It is also assumed that a CD jacket and lyric sheet cannot be displayed on the audio instrument presently owned by the user. To overcome this, the user accesses the Web server 100 from the mobile phone terminal and can download an update software module of the audio instrument by utilizing "software updating" at the mobile phone website provided by a maker. The downloaded update software module is transferred from the mobile phone terminal to the audio instrument to install the module so that the audio instrument becomes compatible with the new format. The user can thereafter see the jacket and lyric sheet on the audio instrument when the new format CD is bought.

Nowadays, there are some mobile phone terminals on which a remote control application is installed so that electrical household appliances can be operated with the mobile phone terminal. By providing product information to the remote control application of the electrical household appliance, the system according to the embodiment of the present invention can work easily with electrical household appliances. More specifically, since a user utilizes daily the mobile phone terminal as a remote control application, the application can appropriately notify the user of software update information and introduce the user to software modification, function expansion and the like.

The following advantageous effects can be obtained according to the embodiment.

(1) Advantageous effects for a product maker.
It is possible to complete update preparation at the same time of announcement to users. Time and monetary cost for mailing and the like necessary for noticing software updating can be reduced.

In addition to the correction through software updating, it is possible to perform extend services in accordance with contents used by the product 300.

It is possible to provide real time extended services in accordance with contents on the Web. By using the system, the mobile phone terminal can monitor the functions of the product 300 and expand the functions of an electrical household appliance, as is the case for a personal computer (PC).

Further, since the correction is possible at early stage, maintenance of the product 300 shipped to the market can be simplified. Accordingly, the relation between makers and users can become close and customer retention can be reinforced. Especially, since the mobile phone terminal is used on an individual basis and in an always-connected state, the services according to the embodiment of the present invention provided to users of mobile phone terminals can provide a close relation to the users more than those users of other than the mobile phone terminal, such as only a PC, Internet-related apparatus and the like.

(2) Advantageous effects for a user.
A user can update software information at any desired time. It is not necessary to consume a wasteful time for mailing and other procedures required previously.

The update program running on the mobile phone terminal 200 provides an environment which allows a user to easily see update information for an electrical household appliance owed by the user. If a software update program adopting an open application program such as Java (registered trademark) is made resident in the mobile phone terminal 200, a user can know update contents in real time.

Next, a modification according to an embodiment of the present invention will be described. In this modification, a notice to a user is performed by so-called push-type information distribution of a notice from a server side to a terminal side.

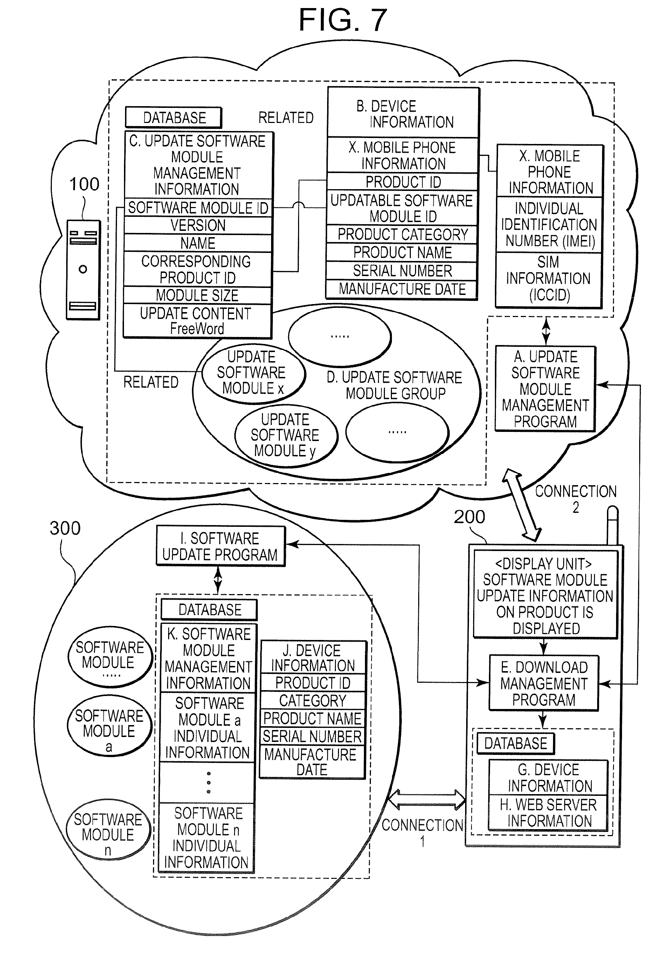

Fig. 7 shows the schematic structure of a software update system according to a modification according to an embodiment of the present invention. In Fig. 7, elements similar to those shown in Fig. 1 are represented by identical reference numerals and the duplicated description thereof is omitted. Different points from the structure shown in Fig. 1 reside in that the Web server 100 holds terminal identification information and the like as additional mobile phone information and the server side determines whether updating a software module of the product 300 is present (necessary).

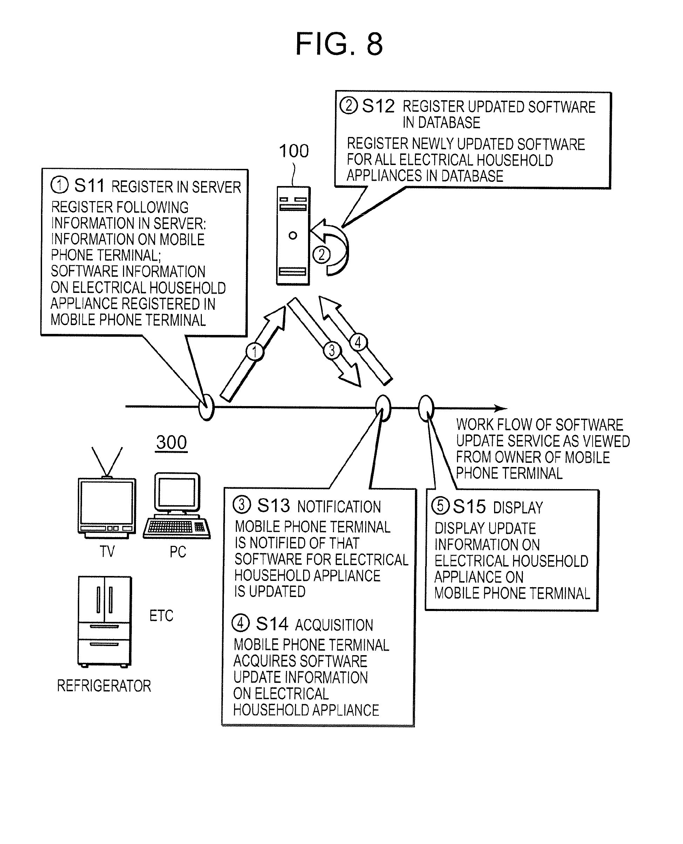

Fig. 8 illustrates a process flow in the software update system shown in Fig. 7. In this modification, the terminal identification information necessary for accessing the mobile phone terminal (user) from the Web server 100 side includes an individual identification number (e.g., IMEI: International Mobile Equipment Identity serial number) for identifying each individual mobile phone terminal and subscriber identity module (SIM) information (ICCID: IC Card Identity) for identifying a subscriber (user). This information is registered in the database of the Web server 100 prior to usage of this service. In the example shown in Fig. 8, although the individual identification number and SIM information are used as the terminal identification information, an e-mail address and the like of the mobile phone terminal may be used in place of (in addition to) the individual identification number and SIM information.

With this configuration, first, in response to a user instruction, the Web server 100 is accessed to register, in the Web server 100, identification information of the type described above on the mobile phone terminal 200 and software information on the product 300 for management of software updating, by the mobile phone terminal 200. (S11).

If software is updated newly at any of electrical household appliances to be managed, the Web server 100 registers the software module in the (S12).

The Web server 100 notifies software updating to the mobile phone terminal 200 which registered the electrical household appliance to be updated (S13).

In response to this notice, the user accesses the Web server 100 through the mobile phone terminal 200 to acquire software update information (S14) and the acquired information is displayed on the display unit of the mobile phone terminal 200 (S15).

Although the subsequent processes are not shown, similar to the system shown in Fig. 1, the user confirms the displayed software update information, and if necessary, downloads the software module and transfers the module to the electrical household appliance to install the module. Even if a user does not access the server, the user can be notified update information (including information on extended function addition).

A personal computer (PC) is shown in Fig. 8 as an example of the product 300. A PC usually has an Internet connection function and can independently download software for update. However, there is a case in which the Internet connection environment is not provided or there is no direct download service for software for update. Therefore, PC is not necessarily excluded from the product 300 according to an embodiment of the present invention.

According to the embodiment, between the server and product, the software update management apparatus capable of data communications with both the server and product is involved. It is therefore possible to execute software updating of the product easily in a consistent manner without time cost incurred on the update notice process to software update process.

Further, by using the software update management apparatus, a plurality of types of products can be collectively managed and software updating can be executed in a consistent process.

Furthermore, according to the embodiment of the present invention, since software updating can be easily executed, it is not only applicable to the bug correction of the product but also positively applicable to software updating for function extensions such as new function addition.

Although the embodiment of the present invention has been described above, various modifications and alterations other than those described above are possible.

For example, although one Web server is used as viewed from the mobile phone terminal, a plurality of Web servers may be used. In this case, the mobile phone terminal 200 holds a plurality of pieces of Web server information H corresponding in number to the number of Web servers.

It should be understood by those skilled in the art that various modifications, combinations, sub-combinations and alterations may occur depending on design requirements and other factors insofar as they are within the scope of the appended claims or the equivalents thereof.

## Claims

1. A software update system comprising:
a product (300) running on software;
a server (100) for providing update software of the product (300); and
a software update management apparatus (200) for managing software updating of the product by connecting the server (100) and the product (300), wherein
the server (100) manages software update information of the product (300), stores the update software, and has a function of performing data communication with the software update management apparatus (200);
the product (300) stores the software and product information on the product and has functions of performing data communication with the software update management apparatus (200) and updating the software; and
the software update management apparatus (200) acquires the product information from the product (300), acquires update information on the software of the product from the server (100) in accordance with the product information, downloads the update software of the product in accordance with the update information, and transmits the downloaded software to the product (300) to update the software of the product.

2. The software update system according to claim 1, wherein
the software update management apparatus (200) accesses the server (100) on own initiative to acquire the update information on the software of the product.

3. The software update system according to claim 1, wherein
the server (100) notifies on own initiative the software update management apparatus (200) of software updating.

4. A software update management apparatus comprising:
first communication means (204) for performing data communication with a server (100) on a network;
second communication means (208) for performing data communication with a product (300) running on software;
product information acquiring means for acquiring product information on the product by using the second communication means (208) and storing the acquired product information;
update information acquiring means for acquiring update information on the software of the product by using the first communication means (204); and
control means (201) for downloading, in accordance with the update information, update software of the product by using the first communication means (204) and transmitting the downloaded update software to the product (300) by using the second communication means (208) to update the software of the product.

5. The software update management apparatus according to claim 4, wherein
the product information includes device information for identifying a device of the product (300) and information on the software installed in the product (300).

6. The software update management apparatus according to either one of claim 4 and 5, wherein:
the second communication means (208) performs data communication with a plurality of products; and
the product information acquiring means acquires and stores the product information on the plurality of products.

7. The software update management apparatus according to any one of claims 4 to 6, wherein
the software update management apparatus (200) comprises a mobile phone terminal.
